# EUROPEAN PATENT SPECIFICATION

(11) **EP 1 048 181 B1**
(45) Date of publication and mention of the grant of the patent: **17.05.2006**
(21) Application number: 99900485.6
(22) Date of filing: 13.01.1999
(51) Int. Cl.: H04Q 7/38, H04L 9/32

(54) **PROCEDURE AND SYSTEM FOR THE PROCESSING OF MESSAGES IN A TELECOMMUNICATION SYSTEM**
NACHRICHTENVERARBEITUNGSVERFAHREN UND SYSTEM IN EINEM TELEKOMMUNIKATIONSSYSTEM
PROCEDE ET SYSTEME DE TRAITEMENT DE MESSAGES DANS UN SYSTEME DE TELECOMMUNICATIONS

(30) Priority: 16.01.1998 FI 980085
(43) Date of publication of application: 02.11.2000
(73) Proprietor: TeliaSonera Finland Oyj, 00510 Helsinki (FI)
(72) Inventor: HEINONEN, Petteri, FIN-02600 Espoo (FI)
(74) Representative: Simmelvuo, Markku Kalevi
(86) International application number: PCT/FI1999/000019
(87) International publication number: WO 1999/039524

(56) References cited:
- WO-A1-95/01684
- US-A- 5 301 234
- US-A- 5 544 246
- US-A- 5 557 679
- US-A- 5 590 133

## Description

### FIELD OF THE INVENTION

The present invention relates to telecommunication technology. In particular, the invention relates to a procedure and a system for the encryption and decryption of short messages and for sender authentication in a telecommunication system.

### BACKGROUND OF THE INVENTION

In telecommunication networks, e.g. GSM networks (GSM, Global System for Mobile communications), heavy encryption of speech transmission is used in the radio link between a mobile station and a base station. Besides voice communication, the use of text messages for communication via mobile stations has increased. With a rise in the service standard, services based on text communication have become common. Text communication can be utilised in various service functions, in paying for services etc. At present, an obstacle to easy encryption of messages is the fact that mobile stations consistent with current mobile communication standards do not permit changes facilitating encryption. The only component that is sufficiently standardised and allows encryption is the subscriber identity module (SIM).

Mobile telephones consistent with a current mobile communication standard, such as the GSM standard, do not directly provide a possibility to use encryption in text communication by mobile stations. Text communication can be used to implement services requiring a high level of data security. However, services requiring a high level of data security cannot become common before sufficient encryption of messages is possible.

Prior art includes EP-A-0810754 which discloses a method of distributing through a communications network enciphering keys for a secure communications session via the network between first and second terminals corresponding first and second terminal keys. The method comprises storing the first and second terminal keys remotely to the terminals; providing a number; generating first and second corresponding partial keys each comprising a corresponding function of the number and a corresponding one of the terminal keys; and dispatching the first partial key towards the second terminal, and vice-versa.

Currently known closed user group solutions in mobile communication networks are implemented e.g. on the basis of mobile telephone numbers. In these applications, the message is delivered separately to each person included in a distribution list irrespective of location. A drawback is that there are considerable differences in the message delivery time between the first and last persons on the distribution list.

At present, a problem with message communication in accordance with a mobile communication standard is that it is possible for a third party to read the content of a text message. A further problem is how to encrypt the messages relating to different services so that the receiver can ascertain the identity of the sender. Another problem is encountered in the sending of encrypted messages to a closed receiver group in a given area.

The object of the present invention is to eliminate the above-mentioned drawbacks or at least to significantly alleviate them.

A specific object of the present invention is to disclose a new type of procedure and system for encrypting the outgoing message traffic between mobile stations consistent with a current mobile communication standard and/or between a mobile station and a service provider and for decrypting the incoming message traffic. In addition, the procedure and system of the invention allow encrypted messages to be sent to and received from a closed receiver group in a given area.

As for the features characteristic of the present invention, reference is made to the claims.

### BRIEF DESCRIPTION OF THE INVENTION

In the procedure of the invention for encrypting a message and/or authenticating the sender of a message in a telecommunication network in a telecommunication system, the transmission software comprises the applications and parameters of the encryption algorithm used. The message is e.g. an SMS message (SMS, Short Message Service) consistent with a mobile communication standard.

In the procedure, using a mobile station, messages are generated and sent and received via the message switching centre of the telecommunication system, the applications and parameters needed by the encryption and/or decryption algorithm used are stored on the subscriber identity module. In addition, the message encrypted and/or to be encrypted and/or the message decrypted and/or to be decrypted is/are stored on the subscriber identity module. As an encryption algorithm, it is possible to use e.g. an RSA algorithm or a corresponding algorithm providing a high level of data security, the function of which is obvious to the skilled person. The telecommunication system preferably comprises a telecommunication network, a mobile station connected to it and a subscriber identity module connected to the mobile station, a message switching centre, transmission software connected to the message switching centre and a service provider connected to the transmission software. A preferred example of the mobile communication system is the GSM system.

According to the invention, a given memory location in the subscriber identity module is monitored and encryption of a message and/or decryption of an encrypted message are/is started on the basis of a predetermined string stored in the given memory location. The memory location may be e.g. an ADN memory location (ADN, Abbreviated Dialling Number). Encryption of messages stored in the subscriber identity module is started if e.g. "Name: bank" and "No.: 1235" is stored in the ADN memory location. An encryption algorithm stored on the subscriber identity module performs the encrypting of the message or messages and returns decrypted messages to the SMS memory locations after the mobile station has been restarted. The string used to activate encryption/decryption can be removed from the subscriber identity module automatically.

In this way, a kind of security feature is achieved. The string activating encryption/decryption will not be accidentally left in the ADN memory location. Messages stored and received on the subscriber identity module can also be automatically encrypted or decrypted.

An encrypted message can also be transmitted only to a closed user group in a predetermined area. Decryption is only possible if the receiver has the encryption key required for the decryption of the message. As a transmission means, it is possible to use e.g. the cell broadcast (CB) feature comprised in the mobile communication standard. When a message is to be sent, an area to which the message is to be delivered is defined. Since the message is transmitted to the receivers using areal mobile communication technology, all users will receive the message simultaneously. If a member of the closed receiver group is absent from the specified area, the information will not be transmitted to that user. The invention is applicable e.g. to the development of a regular customer concept in applications where given information is only to be made available to a desired group.

According to the invention, the user of a mobile station can send a service request in the form of a message. The transmission software gets the required information from the service provider and calls an encryption and/or decryption routine, which encrypts and/or decrypts the message received from the service provider and sends the encrypted and/or decrypted message to the message switching centre and further to the mobile station.

The system of the invention comprises means for monitoring a given memory location in the subscriber identity module and means for starting encryption of a message and/or decryption of an encrypted message on the basis of a predetermined string stored in the given memory location in the subscriber identity module.

The system preferably comprises means for automatically removing the string activating encryption and/or decryption from the subscriber identity module. Moreover, the system comprises means for transmitting the message only to a closed user group in a given area. The user group preferably has means for decrypting the encrypted message.

According to the invention, the transmission software comprises means for calling an encrypting and/or decrypting routine for the encryption and/or decryption of a message received from a service provider and means for sending an encrypted and/or decrypted message further to the message switching centre and from there further to a mobile station.

The subscriber identity module preferably comprises means for automatically encrypting and decrypting messages stored on the subscriber identity module and received messages.

The invention also relates to a subscriber identity module. It comprises a data processing device, a storage device connected to the data processing device and a data transfer device connected to the data processing device. Moreover, the subscriber identity module is provided with an interface for data transfer between the mobile station and the subscriber identity module. The subscriber identity module comprises means for monitoring a given memory location and means for activating the encryption of a message or decryption of an encrypted message on the basis of a predetermined string stored in the given memory location in the subscriber identity module.

As compared with prior art, the invention has the advantage that it allows digital signature of messages as well as encryption and decryption. Thus it makes it possible to reliably identify the sender of a message. In addition, the invention makes it possible to reach a plurality of users in a predetermined area simultaneously and without loading the network. Thus, the members of the closed user group only receive relevant information relating to the time and area in question. A further advantage of the invention is that the messages sent between a service provider and a mobile station can be encrypted while at the same time ascertaining the authenticity of the information.

### BRIEF DESCRIPTION OF THE DRAWINGS

In the following, the invention will be described by way of example with reference to embodiments illustrated in the drawings, wherein
Fig. 1 presents a preferred telecommunication system according to the invention,
Fig. 2 presents a preferred subscriber identity module according to the invention,
Fig. 3 presents a preferred example of the subscriber identity module,
Fig. 4 presents a preferred example of a flow chart representing areal message transmission,
Fig. 5 presents a preferred example of message encryption, and
Fig. 6 presents a block diagram illustrating a preferred example of message encryption between a customer and a content provider.

### DETAILED DESCRIPTION OF THE INVENTION

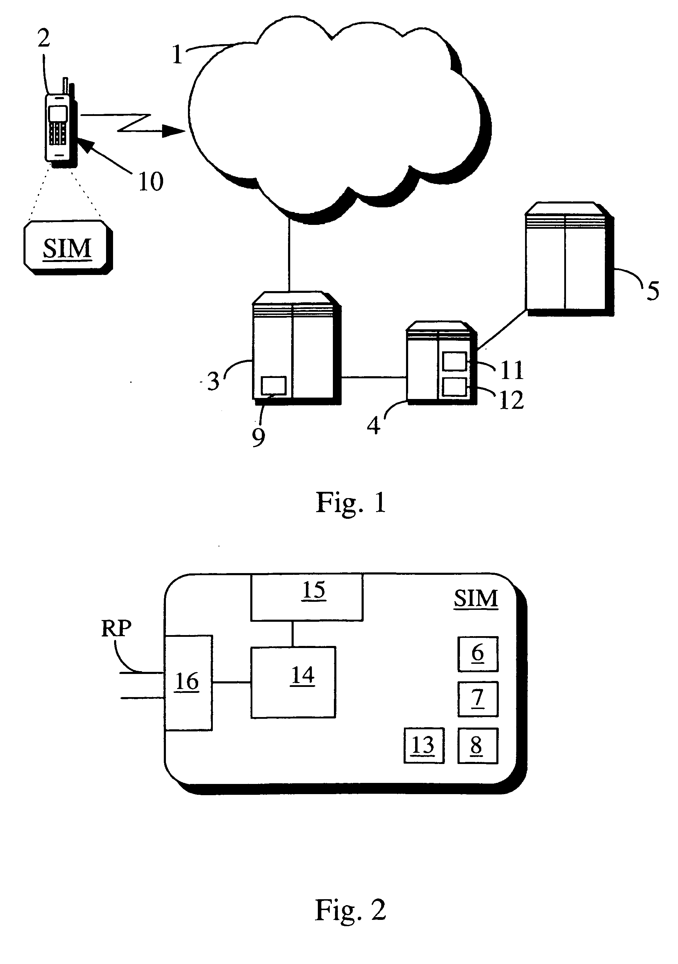

The telecommunication system presented in Fig. 1 comprises a telecommunication network 1 featuring a short message service (SMS) consistent with a mobile communication standard. Other types of message, such as USSD (USSD, Unstructured Service Data), can be used. Furthermore, instead of SMS messages, it is possible to utilise the WAP (WAP, Wireless Application Protocol). The telecommunication network is preferably a GSM network, but other mobile communication networks, such as UMTS (UMTS, Universal Mobile Telecommunication Standard) networks, can also be used. Connected to the mobile communication network 1 is a mobile station 2 with a subscriber identity module SIM connected to it. Also connected to the mobile communication network 1 is a message switching centre 3, which may be e.g. a SM-SC (SM-SC, Short Message Service Centre) in a GSM system. The message switching centre 3 comprises means 9 for transmitting a message exclusively to a closed user group in a predetermined area.

Connected to the message switching centre 3 is transmission software 4, which comprises means 11 for calling an encrypting and/or decrypting routine for the processing of a message received from a service provider 5. Moreover, it comprises means 12 for sending an encrypted and/or decrypted message further to the switching centre 3 and from there to the mobile station 2. Furthermore, the system comprises a service provider 5. The service provider 5 may be e.g. a bank.

A preferred subscriber identity module SIM as presented in Fig. 2 comprises a data processing device 14, a storage device 15 connected to the data processing device 14 and a data transfer device 16, also connected to the data processing device 14. In addition, the subscriber identity module SIM is provided with an interface RP for data transfer between the mobile station 2 and the subscriber identity module SIM.

The subscriber identity module SIM preferably comprises means 6 for monitoring a given memory location in the subscriber identity module SIM and means 7 for activating the encryption of a message and/or decryption of an encrypted message on the basis of a predetermined string stored in the given memory location. In addition, the subscriber identity module comprises means 8 for automatically removing the string used to activate encryption/decryption from the subscriber identity module SIM. Moreover, it comprises means 13 for automatically encrypting and decrypting messages stored and received on the subscriber identity module SIM.

The means 6 -16 presented in Fig. 1 and 2 are implemented in a manner known per se and they will therefore not be described in detail.

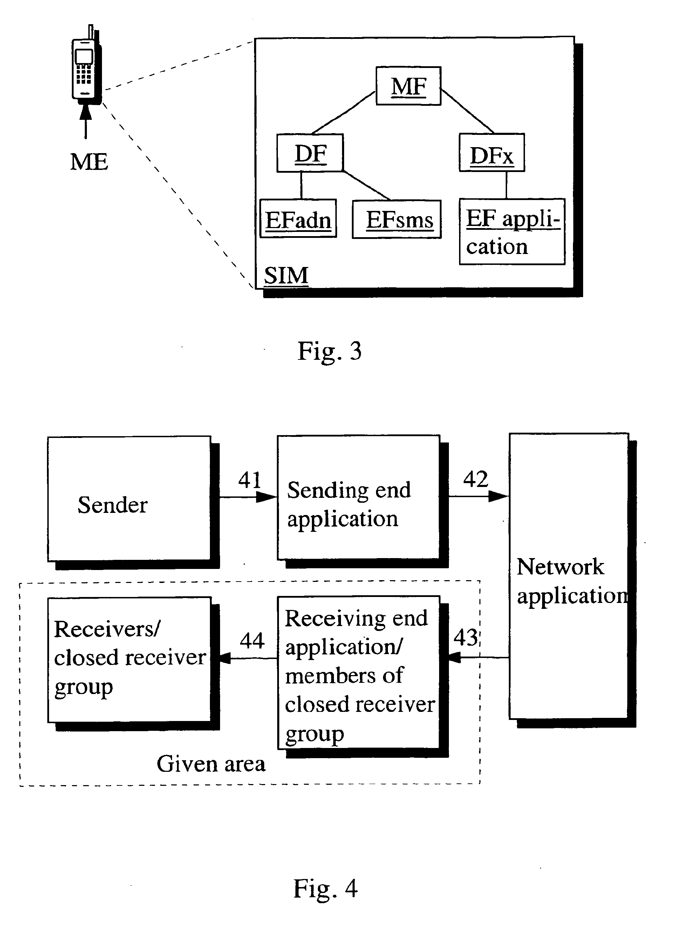

Fig. 3 presents a preferred example of the subscriber identity module SIM according to the present invention. The subscriber identity module SIM is connected to a terminal, which in this example is a mobile station ME consistent with the GSM standard. An application in the DFx directory expects that a predetermined string code is stored in a given location in the EFadn file. When this occurs, the EF application program loads the short messages contained in the EFsms file in the DF directory and processes them in the desired manner. Finally, the program returns the processed short messages into the EFsms file. The communication between the mobile station ME and the subscriber identity module SIM is consistent with the GSM standard.

The system presented in Fig. 4 comprises a sender, a sending end application and a network application. In addition, the system comprises a receiving end application and a closed user group. 'Sender' here means a person and/or the apparatus and/or application which sends the messages according to the invention. The message may be e.g. an SMS or USSD message. The sending and receiving end application is a functional entity which contains both the physical apparatus and the associated application software. In this example, the physical apparatus comprises a mobile telephone, a subscriber identity module connected to it and a possible parallel subscriber identity module, e.g. an intelligent card external to the GSM system. The application software is located either in the mobile telephone and/or in the subscriber identity module and/or in the parallel subscriber identity module or in a system communicating with these. The application software can be distributed between the various parts of the physical apparatus.

'Areal receiver' means a person and/or apparatus and/or application which receives areal messages according to the invention. To receive the messages, mobile users in the area need a sufficient hardware and software assembly. This assembly consists of a physical apparatus and the associated application software. The principle corresponds to that of the sending end application, but there may be differences in concrete assemblies and functional properties.

The network application is a functional entity which communicates with the sending end application. 'Network application' may refer to service bases containing the physical apparatus and the software. The network application may consist of e.g. a short message service centre or a Cell Broadcast service centre and/or systems and interfaces etc. connected with these. The main functions of the network application include receiving the messages from the sending end application, routing them to the switching centres which manage areal message transmission and sending the messages to the receivers in a given area. In an alternative solution, the transmission of the messages can be implemented using other than wireless technology. The messages can be transferred to the network application using e.g. data networks, such as TCP/IP (TCP, Transmission Control Protocol; IP, Internet Protocol) of X.25.

In the following, the numbering used in Fig. 4 is referred to.
41. The sender enters a message, selects a closed user group as the receiver and indicates that he wants to send the message.
42. The sending end application encrypts the message using its encryption key and sends the message to the network application.
43. The network application transmits the message to the closed user group. The network transmits the message transparently without regard to its content or the encryption used with it.
44. The receiving end applications of the closed user group in the area decrypt the message. The receivers read the message in plain-language form.

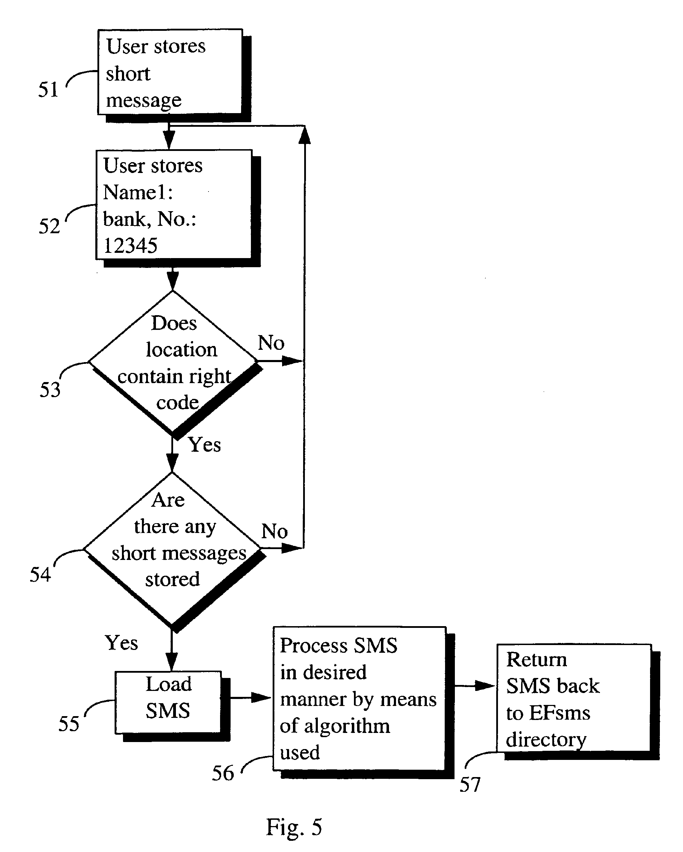

Fig. 5 illustrates the procedure used to encrypt a message, e.g. an SMS message. In block 51, the user stores a short message or short messages on the subscriber identity module. In block 52, the user enters in the Name field of a memory location a predetermined string referring to encryption or decryption. In this example, the string is "bank". In the Number field, the user enters "12345". These strings function as the factor which starts encryption or decryption.

In the next block 53, the system checks whether the strings stored in the memory location require encryption or decryption of messages. If not, action is resumed from block 52. If the stored string functions as an activator of encryption or decryption, then the procedure goes on to block 54. In block 54, a check is made to determine whether there are any messages to be encrypted or decrypted on the subscriber identity module. If not, then action is resumed from block 52. If there are messages to be processed on the subscriber identity module, then these are loaded according to block 55. In block 56, the stored message is processed in the desired manner and using the required algorithm. For encryption, e.g. an RSA algorithm or some other corresponding algorithm creating a high level of data security can be used. Finally, according to block 57, the encrypted or decrypted message is returned into an EFsms file as shown in Fig. 1.

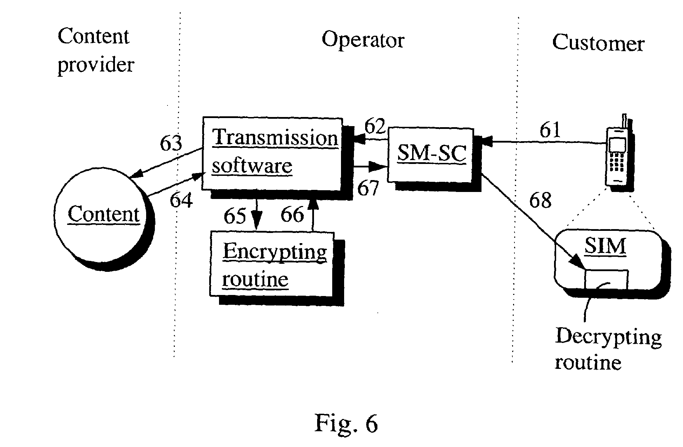

Fig. 6 illustrates the progress of a message when a service request in the form of a message is sent from a mobile station to a service provider. A customer sends (61) a request for the transmission of information to the mobile station user. The SM-SC transmits (62) the request further to the transmission software. The transmission software converts the request into a form understandable to the service provider and transmits (63) it to the service provider. The service provider sends (64) information it has produced back to the transmission software. The transmission software calls (65) the encryption routine, which encrypts the information by using an agreed private key associated with the service provider and transmits the encrypted message to the SM-SC switching centre using a number associated with the private key as the sending telephone number. The encryption algorithm may be part of the transmission software or it may be located in a separate functional unit, e.g. a server. The SM-SC transmits (68) the message to the mobile user. The message is identified as proceeding from a telephone number recognised as being reliable, messages received from this number being decrypted by using a public key associated with the telephone number in question. The mobile station displays the message in a way that permits the user to ascertain its authenticity, e.g. "Message received from N. Read?". The above example can be applied to two-way communication instead of an one-way implementation as described.

The invention is not restricted to the embodiments illustrated above by means of examples, but instead many variations are possible within the scope of the inventive idea defined in the claims.

## Claims

1. Procedure for the encryption of a message and/or authentication of the sender of a message in telecommunication network (1) in a telecommunication system which comprises the telecommunication network (1), a mobile station (2) connected to it and a subscriber identity module (SIM) connected to the mobile station (2), a message switching centre (3) connected to the telecommunication network (1), transmission software (4) connected to the message switching centre and a service provider (5) connected to the transmission software, the transmission software (4) comprising the applications and parameters of the encryption algorithm to be used; and in the procedure messages are generated and sent and received by means of the mobile station (2) via the message switching centre (3) of the telecommunication network (1), the applications and parameters needed by the encryption and/or decryption algorithm to be used are stored on the subscriber identity module (SIM); and in the procedure the message to be processed is stored on the subscriber identity module (SIM), **characterised in that**
a given memory location in the subscriber identity module is monitored and encryption of a message and/or decryption of an encrypted message are/is started on the basis of a predetermined string stored in the given memory location in the subscriber identity module (SIM).

2. Procedure as defined in claim 1, **characterised in that** the string activating encryption and/or decryption is removed from the subscriber identity module (SIM) automatically.

3. Procedure as defined in claim 1 and 2, **characterised in that** a closed user group with a user group-specific decryption key is formed.

4. Procedure as defined in claims 1 - 3, **characterised in that** the message is only transmitted to a closed user group in a given area.

5. Procedure as defined in claims 1 - 4, **characterised in that** the transmission software (4) calls an encryption and/or decryption routine, which encrypts and/or decrypts a message received from the service producer (5) and sends the encrypted and/or decrypted message to the message switching centre (3) and further to the mobile station (2).

6. Procedure as defined in claims 1 - 5, **characterised in that** the message is a short message (SMS, Short Message Service) consistent with a mobile communication standard.

7. Procedure as defined in claims 1 - 6, **characterised in that** the memory location on the subscriber identity module (SIM) is an ADN memory location.

8. Procedure as defined in claims 1 - 7, **characterised in that** messages stored and received on the subscriber identity module (SIM) are encrypted and decrypted automatically.

9. Procedure as defined in claims 1 - 8, **characterised in that** the message is sent to a closed user group using CB (CB, Cell Broadcast).

10. System for the encryption of a message and/or authentication of the sender of a message in a telecommunication network (1) in a telecommunication system which comprises the telecommunication network (1), a mobile station (2) connected to it and a subscriber identity module (SIM) connected to the mobile station (2), a message switching centre (3) connected to the telecommunication network (1), transmission software (4) connected to the message switching centre and a service provider (5) connected to the transmission software, the transmission software (4) comprising the applications and parameters of the encryption algorithm to be used; the mobile station (2) configured to generate and send and receive messages via the message switching centre (3) of the telecommunication network (1), the applications and parameters needed for the encryption and/or decryption algorithm to be used stored on the subscriber identity module (SIM); and the message to be processed stored on the subscriber identity module (SIM), **characterised in that** the system comprises
means for monitoring a given memory location in the subscriber identity module (SIM); and
means (7) for starting the encryption of a message and/or decryption of an encrypted message on the basis of a predetermined string stored in the given memory location in the subscriber identity module (SIM).

11. System as defined in claim 10, **characterised in that** the system comprises means (8) for automatically removing the string activating encryption and/or decryption of a message from the subscriber identity module (SIM).

12. System as defined in claim 10 and 11, **characterised in that** the system comprises means (9) for transmitting a message exclusively to a closed user group in a predetermined area.

13. System as defined in claims 10-12, **characterised in that** the system comprises user group-specific means (10) for decrypting an encrypted message.

14. System as defined in claims 10 - 13, **characterised in that** the transmission software (4) comprises means (11) for calling an encrypting and/or decrypting routine for the encryption and/or decryption of a message received from a service provider (5) and means (12) for sending an encrypted and/or decrypted message further to the message switching centre (3) and from there to the mobile station (2).

15. System as defined in claims 10 - 14, **characterised in that** the system comprises means (13) for automatic encryption and decryption of messages stored on the subscriber identity module (SIM) and messages received.

16. System as defined in claims 10 - 15, **characterised in that** the encryption algorithm is an RSA algorithm or some other acceptable encryption algorithm providing a high level of data security.

17. Subscriber identity module (SIM), comprising a data processing device (14), a storage device (15) connected to the data processing device (14) and a data transfer device (16) which is connected to the data processing device (14) and provided with an interface (RP) for the transfer of information between the mobile station (2) and the subscriber identity module (SIM), **characterised in that** the subscriber identity module (SIM) comprises
means (6) for monitoring a given memory location in the subscriber identity module (SIM); and
means (7) for starting the encryption of a message and/or decryption of an encrypted message on the basis of a predetermined string stored in the given memory location in the subscriber identity module (SIM).

18. Subscriber identity module (SIM) as defined in claim 17, **characterised in that** the subscriber identity module (SIM) comprises means (8) for automatically removing the string activating message encryption and/or decryption from the subscriber identity module (SIM).

19. Subscriber identity module (SIM) as defined in claims 17 and 18, **characterised in that** the subscriber identity module (SIM) comprises means (13) for automatic encryption and decryption of messages stored on the subscriber identity module (SIM) and messages received.

## Patentansprüche

1. Verfahren zum Verschlüsseln einer Nachricht und/oder zum Authentifizieren des Senders einer Nachricht in einem Telekommunikationsnetzwerk (1) in einem Telekommunikationssystem, welches Folgendes aufweist: das Telekommunikationsnetzwerk (1); ein mit diesem verbundenes mobiles Endgerät (2) und ein mit dem mobilen Endgerät (2) verbundenes Teilnehmer-Identifizierungsmodul bzw. SIM-Karte (SIM); eine mit dem Telekommunikationsnetz (1) verbundene Nachrichtenvermittlungsstelle (3); eine mit der Nachrichtenvermittlungsstelle (3) verbundene Übertragungssoftware (4) und einen mit der Übertragungssoftware (4) verbundenen Service-Provider bzw. Dienstanbieter (5), wobei die Übertragungssoftware (4) die Anwendungen und Parameter des zu verwendenden Verschlüsselungsalgorithmus aufweist; und wobei in dem Verfahren mittels des mobilen Endgerätes (2) über die Nachrichtenvermittlungsstelle (3) des Telekommunikationsnetzwerks (1) Nachrichten erzeugt und gesendet und übertragen werden, wobei die von dem zu verwendenden Verschlüsselungs- und/oder Entschlüsselungsalgorithmus benötigten Anwendungen und Parameter auf der SIM-Karte (SIM) gespeichert sind; und wobei in dem Verfahren die zu verarbeitende Nachricht auf der SIM-Karte (SIM) gespeichert wird, **dadurch gekennzeichnet, dass** ein vorgegebener Speicherplatz auf der SIM-Karte überwacht wird und ein Verschlüsseln einer Nachricht und/oder ein Entschlüsseln einer verschlüsselten Nachricht auf der Grundlage einer vorher festgelegten Zeichenkette begonnen werden/wird, welche in dem vorgegebenen Speicherplatz auf den SIM-Karte (SIM) gespeichert ist.

2. Verfahren nach Anspruch 1, **dadurch gekennzeichnet, dass** die Zeichenkette, welche ein Verschlüsseln und/oder Entschlüsseln aktiviert, automatisch aus der SIM-Karte (SIM) entfernt wird.

3. Verfahren nach Anspruch 1 und 2, **dadurch gekennzeichnet, dass** eine geschlossene Benutzergruppe mit einem gruppenspezifischen Entschlüsselungsschlüssel gebildet wird.

4. Verfahren nach Anspruch 1 bis 3, **dadurch gekennzeichnet, dass** die Nachricht nur zu einer geschlossenen Benutzergruppe in einem vorgegebenen Bereich übertragen wird.

5. Verfahren nach Anspruch 1 bis 4, **dadurch gekennzeichnet, dass** die Übertragungssoftware (4) eine Verschlüsselungs- und/oder Entschlüsselungsroutine aufruft, welche eine von dem Dienstanbieter (5) empfangene Nachricht verschlüsselt und/oder entschlüsselt, und die verschlüsselte und/oder entschlüsselte Nachricht zu der Nachrichtenvermittlungsstelle (3) und weiter zu dem mobilen Endgerät (2) sendet.

6. Verfahren nach Anspruch 1 bis 5, **dadurch gekennzeichnet, dass** die Nachricht eine Kurznachricht (SMS, Short Message Service) ist, welche mit einer Mobilkommunikationsnorm übereinstimmt.

7. Verfahren nach Anspruch 1 bis 6, **dadurch gekennzeichnet, dass** der Speicherplatz auf dem SIM-Karte (SIM) ein ADN-Speicherplatz ist.

8. Verfahren nach Anspruch 1 bis 7, **dadurch gekennzeichnet, dass** auf der SIM-Karte (SIM) gespeicherte und empfangene Nachrichten automatisch verschlüsselt und entschlüsselt werden.

9. Verfahren nach Anspruch 1 bis 8, **dadurch gekennzeichnet, dass** die Nachricht zu einer geschlossenen Benutzergruppe unter Verwendung von CB (CB, Cell Broadcast bzw. Zellen-Broadcast-Übertragung) gesendet wird.

10. System zur Verschlüsselung einer Nachricht und/oder zur Authentifikation des Senders einer Nachricht in einem Telekommunikationsnetzwerk (1) in einem Telekommunikationssystem, welches Folgendes aufweist: das Telekommunikationsnetzwerk (1); ein mit diesem verbundenes mobiles Endgerät (2) und ein mit dem mobilen Endgerät (2) verbundenes Teilnehmer-Identifizierungsmodul bzw. SIM-Karte (SIM); eine mit dem Telekommunikationsnetz (1) verbundene Nachrichtenvermittlungsstelle (3); eine mit der Nachrichtenvermittlungsstelle (3) verbundene Übertragungssoftware (4) und einen mit der Übertragungssoftware (4) verbundenen Service-Provider bzw. Dienstanbieter (5), wobei die Übertragungssoftware (4) die Anwendungen und Parameter des zu verwendenden Verschlüsselungsalgorithmus aufweist; und wobei das mobile Endgerät (2) zur Erzeugung und Sendung und zum Empfang von Nachrichten über die Nachrichtenvermittlungsstelle (3) des Telekommunikationsnetzwerks (1) ausgebildet ist, wobei die von dem zu verwendenden Verschlüsselungs- und/oder Entschlüsselungsalgorithmus benötigten Anwendungen und Parameter auf der SIM-Karte (SIM) gespeichert sind; und wobei in dem Verfahren die zu verarbeitende Nachricht auf der SIM-Karte (SIM) gespeichert sind, **dadurch gekennzeichnet, dass** das System Folgendes aufweist: Einrichtungen zur Überwachung eines vorgegebenen Speicherplatzes auf der SIM-Karte (SIM); und
Einrichtungen (7) zum Start der Verschlüsselung einer Nachricht und/oder einer Entschlüsselung einer verschlüsselten Nachricht auf der Grundlage einer vorher festgelegten Zeichenkette, welche in dem vorgegebenen Speicherplatz auf der SIM-Karte (SIM) gespeichert ist.

11. System nach Anspruch 10, **dadurch gekennzeichnet, dass** das System Einrichtungen (8) zur automatischen Entfernung der Zeichenkette aus der SIM-Karte (SIM) aufweist, welche eine Verschlüsselung und/oder Entschlüsselung einer Nachricht aktiviert.

12. System nach Anspruch 10 und 11, **dadurch gekennzeichnet, dass** das System Einrichtungen (9) zur exklusiven Übertragung einer Nachricht an eine geschlossene Benutzergruppe in einem vorher festgelegten Bereich aufweist.

13. System nach Anspruch 10 bis 12, **dadurch gekennzeichnet, dass** das System benutzergruppenspezifische Einrichtungen (10) zur Entschlüsselung einer verschlüsselten Nachricht aufweist.

14. System nach Anspruch 10 bis 13, **dadurch gekennzeichnet, dass** die Übertragungssoftware (4) Einrichtungen (11) zum Aufruf einer Verschlüsselungs- und/oder Entschlüsselungsroutine zur Verschlüsselung und/oder Entschlüsselung eine von einem Dienstanbieter (5) empfangenen Nachricht und Einrichtungen (12) zur Sendung einer verschlüsselten und/oder entschlüsselten Nachricht weiter zu der Nachrichtenvermittlungsstelle (3) und von dort zu dem mobilen Endgerät (2) aufweist.

15. System nach Anspruch 10 bis 14, **dadurch gekennzeichnet, dass** das System Einrichtungen (13) zur automatischen Verschlüsselung und Entschlüsselung von auf der SIM-Karte (SIM) gespeicherten Nachrichten und empfangenen Nachrichten aufweist.

16. System nach Anspruch 10 bis 15, **dadurch gekennzeichnet, dass** der Verschlüsselungsalgorithmus ein RSA-Algorithmus oder irgendein anderer zulässiger Verschlüsselungsalgorithmus mit einem hohen Grad an Datensicherheit ist.

17. Teilnehmer-Identifizierungsmodul bzw. SIM-Karte (SIM) mit einer Datenverarbeitungsvorrichtung (14), einer mit der Datenverarbeitungseinrichtung (14) verbundenen Speichervorrichtung (15) und einer Datenübertragungsvorrichtung (16), welche mit der Datenverarbeitungseinrichtung (14) verbunden und mit einem Interface (RP) zur Übertragung von Informationen zwischen dem mobilen Endgerät (2) und der SIM-Karte (SIM) versehen ist, **dadurch gekennzeichnet, dass** die SIM-Karte (SIM) Folgendes aufweist:
Einrichtungen (6) zur Überwachung eines vorgegebenen Speicherplatzes auf der SIM-Karte (SIM); und
Einrichtungen (7) zum Start der Verschlüsselung einer Nachricht und/oder Entschlüsselung einer verschlüsselten Nachricht auf der Grundlage einer vorher festgelegten Zeichenkette, die an dem vorgegebenen Speicherplatz auf der SIM-Karte (SIM) gespeichert ist.

18. SIM-Karte (SIM) nach Anspruch 17, **dadurch gekennzeichnet, dass** die SIM-Karte (SIM) Einrichtungen (8) zur automatischen Entfernung der Zeichenkette von der SIM-Karte (SIM) aufweist, welche eine Nachrichtenverschlüsselung und/oder -entschlüsselung aktiviert.

19. SIM-Karte (SIM) nach Anspruch 17 und 18, **dadurch gekennzeichnet, dass** die SIM-Karte (SIM) Einrichtungen (13) zur automatischen Verschlüsselung und Entschlüsselung von auf der SIM-Karte (SIM) gespeicherten Nachrichten und empfangenen Nachrichten aufweist.

## Revendications

1. Procédure pour le chiffrement d'un message et/ou l'authentification de l'expéditeur d'un message dans un réseau de télécommunication (1) dans un système de télécommunication qui comprend le réseau de télécommunication (1), une station mobile (2) connectée à celui-ci, et un module d'identité de l'abonné (SIM) connecté à la station mobile (2), un centre de commutation de message (3) connecté au réseau de télécommunication (1), un logiciel de transmission (4) connecté au centre de commutation de message et un fournisseur de services (5) connecté au logiciel de transmission, le logiciel de transmission (4) comprenant les applications et les paramètres de l'algorithme de chiffrement à utiliser ; et, dans la procédure, des messages sont générés et envoyés et reçus au moyen de la station mobile (2) via le centre de commutation de message (3) du réseau de télécommunication (1), les applications et paramètres requis par l'algorithme de chiffrement et/ou de déchiffrement à utiliser sont stockés sur le module d'identité de l'abonné (SIM) ; et, dans la procédure, le message à traiter est stocké sur le module d'identité de l'abonné (SIM),
**caractérisée en ce que** :
un emplacement de mémoire donné dans le module d'identité de l'abonné est surveillé, et un chiffrement d'un message et/ou un déchiffrement d'un message chiffré sont commencés sur la base d'une chaîne prédéterminée stockée dans l'emplacement de mémoire donnée dans le module d'identité de l'abonné (SIM).

2. Procédure telle que définie dans la revendication 1, **caractérisée en ce que** la chaîne activant le chiffrement et/ou le déchiffrement est supprimée du module d'identité de l'abonné (SIM) automatiquement.

3. Procédure telle que définie dans les revendications 1 et 2, **caractérisée en ce qu'**un groupe d'utilisateurs fermé ayant une clé de chiffrement spécifique au groupe d'utilisateurs est formé.

4. Procédure telle que définie dans les revendications 1 à 3, **caractérisée en ce que** le message est transmis uniquement à un groupe d'utilisateurs fermé dans une zone donnée.

5. Procédure telle que définie dans les revendications 1 à 4, **caractérisée en ce que** le logiciel de transmission (4) appelle une routine de chiffrement et/ou de déchiffrement, laquelle chiffre et/ou déchiffre un message reçu du fournisseur de services (5) et envoie le message chiffré et/ou déchiffré au centre de commutation de message (3) ainsi qu'à la station mobile (2).

6. Procédure telle que définie dans les revendications 1 à 5, **caractérisée en ce que** le message est un message court (SMS, service de messages courts) conforme à une norme de communication mobile.

7. Procédure telle que définie dans les revendications 1 à 6, **caractérisée en ce que** l'emplacement de mémoire sur le module d'identité de l'abonné (SIM) est un emplacement de mémoire ADN.

8. Procédure telle que défmie dans les revendications 1 à 7, **caractérisée en ce que** les messages stockés et reçus sur le module d'identité de l'abonné (SIM) sont chiffrés et déchiffrés automatiquement.

9. Procédure telle que définie dans les revendications 1 à 8, **caractérisée en ce que** le message est envoyé à un groupe d'utilisateurs fermé, à l'aide d'une diffusion cellulaire CB (CB, Cell Broadcast).

10. Système pour le chiffrement d'un message et/ou l'authentification de l'expéditeur d'un message dans un réseau de télécommunication (1) dans un système de télécommunication qui comprend le réseau de télécommunication (1), une station mobile (2) connectée à celui-ci et un module d'identité de l'abonné (SIM) connecté à la station mobile (2), un centre de commutation de message (3) connecté au réseau de télécommunication (1), un logiciel de transmission (4) connecté au centre de commutation de message et un fournisseur de services (5) connecté au logiciel de transmission, le logiciel de transmission (4) comprenant les applications et les paramètres de l'algorithme de chiffrement à utiliser ; la station mobile (2) configurée pour générer et envoyer et recevoir des messages via le centre de commutation de message (3) du réseau de télécommunication (1), les applications et les paramètres requis par l'algorithme de chiffrement et/ou de déchiffrement à utiliser stockés sur le module d'identité de l'abonné (SIM) ; et le message à traiter stocké sur le module d'identité de l'abonné (SIM),
**caractérisé en ce que** le système comprend :
des moyens pour surveiller un emplacement de mémoire donné dans le module d'identité de l'abonné (SIM) ; et
des moyens (7) pour commencer le chiffrement d'un message et/ou le déchiffrement d'un message chiffré sur la base d'une chaîne prédéterminée stockée dans l'emplacement de mémoire donnée dans le module d'identité de l'abonné (SIM).

11. Système tel que défini dans la revendication 10, **caractérisé en ce que** le système comprend des moyens (8) pour supprimer automatiquement la chaîne activant le chiffrement et/ou le déchiffrement d'un message à partir du module d'identité de l'abonné (SIM).

12. Système tel que défini dans les revendications 10 et 11, **caractérisé en ce que** le système comprend des moyens (9) pour transmettre un message exclusivement à un groupe d'utilisateurs fermé dans une zone prédéterminée.

13. Système tel que défini dans les revendications 10 à 12, **caractérisé en ce que** le système comprend des moyens spécifiques au groupe d'utilisateurs (10) pour déchiffrer un message chiffré.

14. Système tel que revendiqué dans les revendications 10 à 13, **caractérisé en ce que** le logiciel de transmission (4) comprend des moyens (11) pour appeler une routine de chiffrement et/ou de déchiffrement pour le chiffrement et/ou le déchiffrement d'un message reçu d'un fournisseur de services (5) et des moyens (12) pour envoyer un message chiffré et/ou déchiffré au centre de commutation de message (3) et, depuis celui-ci, à la station mobile (2).

15. Système tel que défini dans les revendications 10 à 14, **caractérisé en ce que** le système comprend des moyens (13) pour le chiffrement et le déchiffrement automatiques de messages stockés sur le module d'identité de l'abonné (SIM) et de messages reçus.

16. Système tel que défini dans les revendications 10 à 15, **caractérisé en ce que** l'algorithme de chiffrement est un algorithme RSA, ou tout autre algorithme de chiffrement acceptable fournissant un niveau élevé de sécurité des données.

17. Module d'identité de l'abonné (SIM) comprenant un dispositif de traitement de données (14), un dispositif de stockage (15) connecté au dispositif de traitement de données (14) et un dispositif de transfert de données (16) qui est connecté au dispositif de traitement de données (14) et disposant d'une interface (RP) pour le transfert d'informations entre la station mobile (2) et le module d'identité de l'abonné (SIM), **caractérisé en ce que** le module d'identité de l'abonné (SIM) comprend :
des moyens (6) pour surveiller un emplacement de mémoire donné dans le module d'identité de l'abonné (SIM) ; et
des moyens (7) pour commencer le chiffrement d'un message et/ou le déchiffrement d'un message chiffré sur la base d'une chaîne prédéterminée stockée dans l'emplacement de mémoire donnée dans le module d'identité de l'abonné (SIM).

18. Module d'identité de l'abonné (SIM), tel que défini dans la revendication 17, **caractérisé en ce que** le module d'identité de l'abonné (SIM) comprend des moyens (8) pour supprimer automatiquement la chaîne activant le chiffrement et/ou le déchiffrement d'un message à partir du module d'identité de l'abonné (SIM).

19. Module d'identité de l'abonné (SIM), tel que défini dans les revendications 17 et 18, **caractérisé en ce que** le module d'identité de l'abonné (SIM) comprend des moyens (13) pour le chiffrement et le déchiffrement automatiques de messages stockés sur le module d'identité de l'abonné (SIM) et de messages reçus.
